# EUROPEAN PATENT APPLICATION

(11) **EP 4 099 428 A1**
(43) Date of publication of application: **07.12.2022**
(21) Application number: 21746968.3
(22) Date of filing: 21.01.2021
(51) Int. Cl.: H01M 4/13, H01M 4/133, H01M 4/36, H01M 4/48, H01M 4/62

(54) **NONAQUEOUS-ELECTROLYTE SECONDARY BATTERY NEGATIVE ELECTRODE AND NONAQUEOUS-ELECTROLYTE SECONDARY BATTERY**

(30) Priority: 31.01.2020 JP 2020015894
(71) Applicant: Panasonic Intellectual Property Management Co., Ltd., Osaka-shi, Osaka 540-6207 (JP)
(72) Inventor: HASEGAWA, Masaki, Chuo-ku, Osaka-shi, Osaka 540-6207 (JP); NAMBUYA, Shunsuke, Chuo-ku, Osaka-shi, Osaka 540-6207 (JP); HORIUCHI, Yuto, Chuo-ku, Osaka-shi, Osaka 540-6207 (JP)
(74) Representative: Novagraaf International SA
(86) International application number: PCT/JP2021/001961
(87) International publication number: WO 2021/153398

(57) **Abstract**

A negative electrode for a non-aqueous electrolyte secondary battery includes a negative electrode current collector, and a negative electrode mixture layer supported on the negative electrode current collector. The negative electrode mixture layer includes a silicon material, a carbon material capable of electrochemically absorbing and releasing lithium ions, and electrically conductive fibers. The silicon material has a lithium-ion conductive phase, and silicon particles dispersed in the lithium-ion conductive phase. When the negative electrode mixture layer is divided into two layers, a first region and a second region, having the same thickness, the first region is nearer to the negative electrode current collector than the second region is, the silicon material is contained more in the second region than in the first region, and the conductive fibers are contained in the second region.

## Description

### [Technical Field]

The present disclosure relates to a negative electrode for a non-aqueous electrolyte secondary battery and a non-aqueous electrolyte secondary battery.

### [Background Art]

A non-aqueous electrolyte secondary battery represented by a lithium ion secondary battery includes a positive electrode, a negative electrode, and a non-aqueous electrolyte. The negative electrode includes a negative electrode mixture layer including a negative electrode active material, and a negative electrode current collector with the negative electrode mixture layer supported thereon. For use as the negative electrode active material, studies have been made on a material containing silicon that has a considerably large theoretical capacity as compared to graphite. The material containing silicon includes, for example, a composite material (SiOₓ) constituted of fine Si particles disperse in a SiO₂ matrix.

Patent Literature 1 proposes forming a first layer including a compound containing an element capable of forming an alloy with Li, such as SiOₓ, on a surface of the negative electrode current collector, and forming a second layer including a carbon material capable of absorbing and releasing Li ions, such as the graphite, on the surface of the first layer. The first layer and the second layer constitute the negative electrode mixture layer.

### [Citation List]

### [Patent Literature]

[PTL 1] Japanese Laid-Open Patent Publication No. 2009-266705

### [Summary of Invention]

With the negative electrode as disclosed in Patent Literature 1 in which only a carbon material is used as the negative electrode active material in the second layer (surface layer), the permeation of non-aqueous electrolyte into the negative electrode mixture layer is low, and the cycle characteristics (esp., the high-rate cycle characteristics) deteriorate.

In view of the above, one aspect of the present disclosure relates to a negative electrode for a non-aqueous electrolyte secondary battery, including: a negative electrode current collector; and a negative electrode mixture layer supported on the negative electrode current collector, wherein the negative electrode mixture layer includes a silicon material, a carbon material capable of electrochemically absorbing and releasing lithium ions, and electrically conductive fibers, the silicon material has a lithium-ion conductive phase, and silicon particles dispersed in the lithium-ion conductive phase, when the negative electrode mixture layer is divided into two layers, a first region and a second region, having the same thickness, the first region is nearer to the negative electrode current collector than the second region is, the silicon material is contained more in the second region than in the first region, and the electrically conductive fibers are contained in the second region.

Another aspect of the present disclosure relates to a non-aqueous electrolyte secondary battery, including: a positive electrode; a negative electrode; and a non-aqueous electrolyte, wherein the negative electrode is the aforementioned negative electrode.

According to the present disclosure, the cycle characteristics of the non-aqueous electrolyte secondary battery can be improved.

### [Brief Description of Drawings]

[FIG. 1] A schematic cross-sectional view of a negative electrode for a non-aqueous electrolyte secondary battery according to one embodiment of the present disclosure.
[FIG. 2] A partially cut-away schematic oblique view of a non-aqueous electrolyte secondary battery according to one embodiment of the present disclosure.

### [Description of Embodiments]

A negative electrode for a non-aqueous electrolyte secondary battery according to an embodiment of the present disclosure includes a negative electrode current collector, and a negative electrode mixture layer supported on the negative electrode current collector. The negative electrode mixture layer contains a negative electrode active material and electrically conductive fibers. The negative electrode active material includes a silicon material, and a carbon material capable of electrochemically absorbing and releasing lithium ions. The silicon material (hereinafter sometimes referred to as a composite material) has a lithium-ion conductive phase, and silicon particles dispersed in the lithium-ion conductive phase. When the negative electrode mixture layer is divided into two layers, a first region and a second region, having the same thickness, the first region is nearer to the negative electrode current collector than the second region is, the silicon material is contained more in the second region than in the first region, and the conductive fibers are contained in the second region. Here, the above configuration of the silicon material being contained more in the second region than in the first region is includes a configuration where the silicon material is not included in the first region.

When the silicon material is contained more in the second region (i.e., the upper layer with respect to the negative electrode current collector) than in the first region (the lower layer), the negative electrode surface (second region) becomes roughened as the silicon material expands and contracts during charge and discharge. With the progress of the roughening of the negative electrode surface, the non-aqueous electrolyte can be more likely to permeate into the negative electrode mixture layer, allowing the battery reaction to proceed smoothly.

To the above roughening, the balance between the stresses generated due to expansion of the silicon material during charge, at the interior and at the surface of the negative electrode mixture layer makes a contribution. The hard silicon material is much present at the surface of the negative electrode mixture layer, and the area surrounding the silicon material is prone to be affected by the above stress, which also makes a contribution to the above roughening.

With the progress of the roughening of the negative electrode surface, gaps are formed around the silicon material in the second region (on the negative electrode surface side) of the negative electrode mixture layer, and the silicon material tends to be isolated. By including the conductive fibers in the second region, conductive paths are secured by the conductive fibers even when the silicon material is isolated, allowing it to continue to contribute to the charge and discharge reactions, and thus, a high capacity can be maintained. When the silicon material is isolated and the conductive paths are broken, the material cannot contribute to the charge and discharge reactions any more, and the capacity decreases.

When conductive fibers are used as a conductive agent, the effect of securing the conductive paths for the isolated silicon material can be remarkably obtained. With the conductive fibers, as compared to with spherical conductive particles, such as acetylene black, the contact points between the isolated silicon material and its surrounding negative electrode active material can be more easily secured, and conductive paths can be easily formed between the isolated silicon material and its surrounding negative electrode active material.

Furthermore, by containing less silicon material in the first region than in the second region, the increase in the contact resistance between the negative electrode mixture layer (first region) and the negative electrode current collector due to expansion and contraction of the silicon material can be suppressed.

From the forgoing, with the above-described negative electrode, the cycle characteristics of the non-aqueous electrolyte secondary battery, particularly the high-rate cycle characteristics can be improved.

### (Silicon material)

The silicon material is a composite material constituted of silicon particles (fine Si phase) dispersed in a lithium-ion conductive phase (matrix). The lithium-ion conductive phase preferably contains at least one selected from the group consisting of a SiO₂ phase, a silicate phase, and a carbon phase. The lithium-ion conductive phase serves to relax the stress generated due to expansion and contraction of the silicon particles during charge and discharge. Therefore, the composite material is advantageous for improving the cycle characteristics.

The SiO₂ phase is an amorphous phase containing 95 mass% or more silicon dioxide. The SiO₂ phase tends to absorb lithium ions during the initial charge and form a Li₄SiO₄ phase. A composite material constituted of silicon particles dispersed in a SiO₂ phase is represented by SiOₓ, where x is, for example, 0.5 ≤ x < 2, preferably 0.8 ≤ x ≤ 1.6. The SiOₓ can be obtained, for example, by heat-treating silicon monoxide, to separate it into a SiO₂ phase and a fine Si phase through disproportionation reaction. By observing a particle cross section of SiOₓ using a transmission electron microscope (TEM), the Si particles dispersed in the SiO₂ phase can be confirmed.

The silicate phase preferably contains at least one of an alkali metal element (a Group 1 element other than hydrogen of the long-periodic table) and a Group 2 element of the long-periodic table. The alkali metal element includes lithium (Li), potassium (K), sodium (Na), and the like. The Group 2 element includes magnesium (Mg), calcium (Ca), strontium (Sr), barium (Ba), and the like. The lithium silicate phase can have a composition represented by a formula: Li_{2y}SiO_{2+y}, where 0 < y < 2. Here, y may be 1/2, and may be 1. The composite material constituted of silicon particles dispersed in a silicate phase can be obtained by, for example, pulverizing a mixture of silicate and a raw material silicon under stirring in a ball mill or the like, into fine particles, and then heat-treating the mixture in an inert atmosphere.

The average particle diameter of the silicon particles (before the first charge) dispersed in the silicate phase may be 50 nm or more and 500 nm or less, and may be 100 nm or more and 400 nm or less. The average particle diameter of the silicon particles can be obtained by averaging the maximum diameters of any 100 silicon particles using a SEM image of a cross section of the composite material. The content of the silicon particles dispersed in the silicate phase may be 30 mass% or more and 95 mass% less, and may be 35 mass% or more and 75 mass% or less, relative to the whole composite material.

The carbon phase includes, for example, amorphous carbon having low crystallinity. The amorphous carbon may be, for example, graphitizable carbon (hard carbon) or non-graphitizable carbon (soft carbon). A composite material constituted of silicon particles dispersed in a carbon phase can be obtained by, for example, pulverizing a mixture of a carbon source and a raw material silicon under stirring in a ball mill or the like, into fine particles, and then heat-treating the mixture in an inert atmosphere. For the carbon source, for example, saccharides, such as carboxymethyl cellulose (CMC), a water-soluble resin, such as polyvinylpyrrolidone, and the like can be used.

The composition of the silicon material can be determined by, for example, obtaining a reflected electron image of a cross section of the negative electrode mixture layer with a field emission scanning electron microscope (FE-SEM), to observe a particle of the silicon material, and performing an elemental analysis on the observed particle of the silicon material. For the elemental analysis, for example, electron probe microanalyzer (EPMA) can be used. The composition of the lithium ion conductive phase can also be determined by the above analysis.

The silicon material is, for example, a particulate material. The average particle diameter (D50) of the silicon material is, for example, 1 µm or more and 25 µm or less, preferably 4 µm or more and 15 µm or less. In the above range, favorable battery performance tends to be obtained. In the present specification, the average diameter (D50) means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used.

When the lithium ion conductive phase is a SiO₂ phase or a silicate phase, in view of improving the conductivity, at least part of the particle surface of the silicon material may be covered with a conductive layer. The conductive layer contains a conductive material, such as conductive carbon. The amount of coating of the conductive layer is, for example, 1 part by mass or more and 10 parts by mass or less per 100 parts by mass of the total of the silicon material particles and the conductive layer. The silicon material particles having a conductive layer on its surface can be obtained by, for example, mixing coal pitch or the like with silicon material particles, followed by heat-treating in an inert atmosphere.

In view of improving the permeability of the non-aqueous electrolyte into the negative electrode mixture layer, a ratio: M1_{Si}/M2_{Si} of a mass M1_{Si} of the silicon material contained in the first region to a mass M2_{Si} of the silicon material contained in the second region is preferably 0 or more and 0.75 or less, and more preferably 0 or more and 0.5 or less.

The above M1_{Si}/M2_{Si} can be determined, for example, by the following method.

A cross section of the negative electrode mixture layer is observed with a scanning electron microscope (SEM), and quantitative mapping is performed by energy dispersive X-ray (EDX) spectroscopy. By this, the element content of the negative electrode mixture layer is measured at each scanning position in the cross section, to obtain an element distribution. For example, by integrating the Si element distribution in one region in the cross section, the Si content in the region can be determined.

Based on the above method, a content M1 of Si in the first region and a content M2 of Si in the second region in the cross section of the negative electrode mixture layer are determined, from which M1/M2 is calculated. When the silicon material in the first region and the silicon material in the second region have the same composition (e.g., when SiOₓ is contained in the first region and the second region, as long as the value x is not different between the first region and the second region), the M1/M2 can be determined as the M1_{Si}/M2_{Si}.

The first region may contain no silicon material. In this case, the negative electrode surface tends to become roughened by containing much silicon material in the second region. Furthermore, the increase in the contact resistance between the negative electrode mixture layer (first region) and the negative electrode current collector, which occurs due to expansion and contraction of the silicon material, can be suppressed.

The content of the silicon material in the second region (i.e., the mass ratio thereof to the whole negative electrode mixture in the second region) may be 1 mass% or more and 30 mass% or less. When the content of the silicon material in the second region is 1 mass% or more, the effect of improving the permeability of the non-aqueous electrolyte into the negative electrode mixture layer tends to be obtained. When the content of the silicon material in the second region is 30 mass% or less, the effect of securing the conductive paths for the isolated silicon material with the conductive fibers tends to be obtained.

### (Conductive fibers)

For the conductive fibers, carbon fibers, metal fibers, and like can be used. In particular, the conductive fibers are preferably carbon fibers. Examples of the carbon fibers include carbon nanotubes (CNTs), carbon nanocoils (CNCs), carbon nanofibers (CNFs), and carbon nanohorns (CNHs). In particular, the carbon fibers are preferably CNTs, in terms of its comparatively easy availability. Examples of the metal fibers include fibers made of gold or copper.

In view of securing the conductive paths for the isolated silicon material, the average fiber diameter D of the conductive fibers is, for example, 1 nm or more and 30 nm or less, preferably 1 nm or more and 15 nm or less. When the average fiber diameter D of the conductive fibers is 1 nm or more, the strength is sufficiently secured, and the conductive paths are firmly formed. When the average fiber diameter D of the conductive fibers is 15 nm or less, the conductive fibers are likely to present between the negative electrode active material particles, and the conductive network between the negative electrode active material particles tends to be maintained during charge and discharge.

In view of securing the conductive paths for the isolated silicon material, an average fiber length L of the conductive fibers is preferably 0.5 µm or more and 150 µm or less, and more preferably 1 µm or more and 20 µm or less. In the similar point of view, the ratio: L/D of the average fiber length L to the average fiber diameter D is preferably 500 or more and 20,000 or less.

The average fiber diameter D and the average fiber length L of the conductive fibers can be determined by image analysis using a scanning electron microscope (SEM). Specifically, a plurality of (e.g., approx. 100 to 1000) conductive fibers are randomly selected, to measure the fiber lengths L and the fiber diameters D thereof, and averaging the fiber lengths L and the fiber diameters D, respectively. The fiber length L refers to the length when the fiber is taken as a straight fiber.

The conductive fibers are contained in at least the second region. When the silicon material is contained in the first region, the conductive fibers or a conductive agent other than the conductive fibers may be contained in the first region.

The content of the conductive fibers in the second region (i.e., the mass ratio thereof to the whole negative electrode mixture in the second region) is preferably 0.001 mass% or more and 1 mass% or less, more preferably 0.005 mass% or more and 0.8 mass% or less. When the content of the conductive fibers in the second region is 0.001 mass% or more, the effect of securing the conductive paths for the isolated silicon material tends to be obtained. When the content of the conductive fibers in the second region is 1 mass% or less, much silicon material can be easily contained in the second region, and the effect of improving the permeability of the non-aqueous electrolyte into the negative electrode mixture layer tends to be obtained.

In the second region, the conductive fibers are contained preferably in an amount of 0.005 parts by mass or more and 0.5 parts by mass or less, relative to 100 parts by mass of the silicon material. In this case, the conductive paths for the isolated silicon material tend to be effectively secured with the conductive fibers.

The conductive fibers can be confirmed by, for example, a SEM image of a cross section of the negative electrode mixture layer. When the conductive fibers are carbon fibers, such as CNTs, the analysis method thereof may be, for example, Raman spectroscopy.

### (Carbon material)

The carbon material may be contained in both the first and second regions. In view of securing the capacity and reducing the amount of the silicon material packed in the first region, it is preferable to contain the carbon material more in the first region than in the second region. The carbon material shows a small degree of expansion and contraction during charge and discharge, and is excellent in electrical conductivity. By containing the carbon material more in the first region than in the second region and reducing the amount of the silicon material packed in the first region, the adhesion between the first region and the negative electrode current collector is likely to be maintained favorably. In the first region rich in the carbon material, the amount of the conductive agent, such as conductive fibers, used therein can be reduced.

In view of securing the capacity and reducing the amount of the silicon material packed in the first region, the content of the carbon material in the first region (i.e., the mass ratio thereof to the whole negative electrode mixture in the first region) may be 85 mass% or more and 99 mass% or less. When the carbon material, which shows a smaller degree of expansion and contraction than the silicon material, is contained much in the first region within the above range, the increase in the contact resistance between the negative electrode mixture layer (first region) and the negative electrode current collector due to expansion and contraction of the silicon material tends to be suppressed.

In view of securing the amount of the silicon material packed in the second region, the content of the carbon material in the second region (i.e., the mass ratio thereof to the whole negative electrode mixture in the second region) may be 65 mass% or more and 99 mass% or less.

The carbon material is, for example, a particulate material. The average particle diameter (D50) of the carbon material is, for example, 5 µm or more and 30 µm or less.

Examples of the carbon material capable of absorbing and releasing lithium ions include graphite, graphitizable carbon (soft carbon), and non-graphitizable carbon (hard carbon). The carbon material may be used singly or in combination of two or more kinds.

In particular, the carbon material is preferably graphite, because of its excellent stability during charge and discharge and its small irreversible capacity. Examples of the graphite include natural graphite, artificial graphite, and graphitized mesophase carbon particles. The graphite particles may partially contain amorphous carbon, graphitizable carbon, and/or non-graphitizable carbon.

Graphite is a carbon material with a developed graphite-like crystal structure. The interplanar spacing d002 of the (002) plane of the graphite measured by the X-ray diffractometry may be, for example, 0.340 nm or less, and may be 0.3354 nm or more and 0.340 nm or less. The crystallite size Lc (002) of the graphite may be, for example, 5 nm or more, and may be 5 nm or more and 200 nm or less. The crystallite size Lc (002) is measured by, for example, the Scherrer method. When the interplanar spacing d002 of the (002) plane of the graphite and the crystallite size Lc (002) are within the above ranges, a high capacity is likely to be obtained.

The BET specific surface area of the graphite may be 3.0 m²/g or more and 4.5 m²/g or less. When the BET specific surface area of the graphite is 3.0 m²/g or more, the absorption and release of Li ions in the charge and discharge reactions tends to smoothly proceed. When the BET specific surface area of the graphite is 4.5 m²/g or less, the side reactions at the graphite surface in the charge and discharge reactions are suppressed.

The particle internal porosity (i.e., the ratio of voids occupying the interior of the particle) of the graphite is preferably 10% or more, and is more preferably 12% or more and 25% or less, further preferably 12% or more and 23% or less. With the graphite having a particle internal porosity of 10% or more, the stress generated due to expansion and contraction of the silicon material tends to be absorbed and reduced, the isolation of the active material particles including the graphite tends to be suppressed, and the effect of securing the conductive paths with the conductive fibers tend to be obtained.

The graphite can be obtained by, for example, pulverizing coke (precursor) serving as a main raw material into a predetermined size, and aggregating them together with a binder, which is then pressure-molded into blocks, and the molded bodies are baked at a temperature of 2600 °C or higher, to be graphitized. By pulverizing the graphitized block-shaped molded bodies and sieving the pulverized product, graphite particles of a desired size can be obtained. For example, depending on the amount of a volatile component added to the block-shaped molded bodies, the internal porosity can be adjusted to 10% or more.

### (Acrylic resin)

At least the second region of the negative electrode mixture layer may further contain an acrylic resin. The acrylic resin serves to firmly solidify the negative electrode mixture, and enhance the binding force between the negative electrode active material particles to each other and between the negative electrode active material particles and the negative electrode current collector. The surface of the silicon material is appropriately covered with the acrylic resin. Therefore, even when gaps are formed around the silicon material, the silicon material can be held in place, and the drop of the silicon material from the negative electrode mixture layer can be suppressed.

The content of the acrylic resin in the second region (i.e., the mass ratio thereof to the whole negative electrode mixture in the second region) may be 1 mass% or less, and may be 0.2 mass% or more and 1 mass% or less.

The acrylic resin is a polymer containing at least one selected from the group consisting of a (meth)acrylic acid unit and a (meth)acrylic acid salt unit. The polymer may be a homopolymer or a copolymer. In the copolymer, the total of the (meth)acrylic acid unit and the (meth)acrylic acid salt unit is preferably 50 mol% or more, more preferably 80 mol% or more. In the present specification, the "(meth)acrylic acid unit" means at least one selected from the group consisting of an "acrylic acid unit" and a "methacrylic acid unit."

In view of the ease of preparation of the negative electrode slurry and the advantage in improving the battery characteristics, the acrylic resin preferably contains at least a (meth)acrylic acid salt unit. In this case, examples of the (meth)acrylic acid salt include an alkali metal salt, such as lithium salt and sodium salt, and an ammonium salt.

Specific examples of the acrylic resin include polyacrylic acid, polymethacrylic acid, copolymers containing repeating units of acrylic acid and/or methacrylic acid (e.g., acrylic acid-methacrylic acid copolymer, ethylene-acrylic acid copolymer), and salts thereof. The acrylic resin may be used singly or in combination of two or more kinds.

The weight-average molecular weight of the acrylic resin is preferably 3,000 or more and 10,000,000 or less. When the weight-average molecular weight of the acrylic resin is in the above range, the acrylic resin can fully exert its effect on improving the cycle characteristics and reducing the internal resistance, and the gelation (increase in viscosity) of the negative electrode slurry can be suppressed, which eases the production of the negative electrode.

In the following, an example of a method for producing a negative electrode will be described.

A first negative electrode slurry of a first negative electrode mixture dispersed in a dispersion medium and a second negative electrode slurry of a second negative electrode mixture dispersed in a dispersion medium are prepared. The first negative electrode mixture and the second negative electrode mixture each contain a carbon material, a silicon material, and electrically conductive fibers. At this time, the silicon material is contained more in the second negative electrode mixture than in the first negative electrode mixture. The first negative electrode mixture may contain neither the silicon material nor the conductive fibers. The first negative electrode mixture and the second negative electrode mixture may each further contain, as needed, a binder, a thickener, a conductive agent other than conductive fibers, and the like.

The first negative electrode slurry is applied onto the negative electrode current collector, and the first applied film is dried. The second negative electrode slurry is applied onto the first applied film, and the second applied film is dried. A stack of the first and second applied films after drying may be rolled. In this way, a first negative electrode mixture layer, and a second negative electrode mixture layer which contains more silicon material than in the first negative electrode mixture layer and contains the conductive fibers are formed in this order on the negative electrode current collector. The first applied film may be dried at the same time when drying the second applied film after applying the second negative electrode slurry onto the first applied film. The thicknesses of the first negative electrode mixture layer and the second negative electrode mixture layer may be the same or different from each other. The thickness of the first negative electrode mixture layer or the second negative electrode mixture layer may be, for example, 1/4 or more of the overall thickness of the negative electrode mixture layer. When the thicknesses of the first negative electrode mixture layer and the second negative electrode mixture layer are the same, the first negative electrode mixture layer corresponds to the first region, and the second negative electrode mixture layer corresponds to the second region.

Alternatively, three or more negative electrode slurries differing in the content of the silicon material in the negative electrode mixture may be prepared. Starting from the one having the smallest silicon material content, the negative electrode slurries may be applied onto the negative electrode current collector in the ascending order of the silicon material content, to form a negative electrode mixture layer in which the amount of the silicon material gradually increases from the negative electrode current collector side to the negative electrode surface side. When such a negative electrode mixture layer is divided into the first region and the second region, the silicon material is contained more in the second region than in the first region. Moreover, electrically conductive fibers are contained in some of the slurries which at least have a large silicon material content of the three or more negative electrode slurries, so that the second region can contain the conductive fibers.

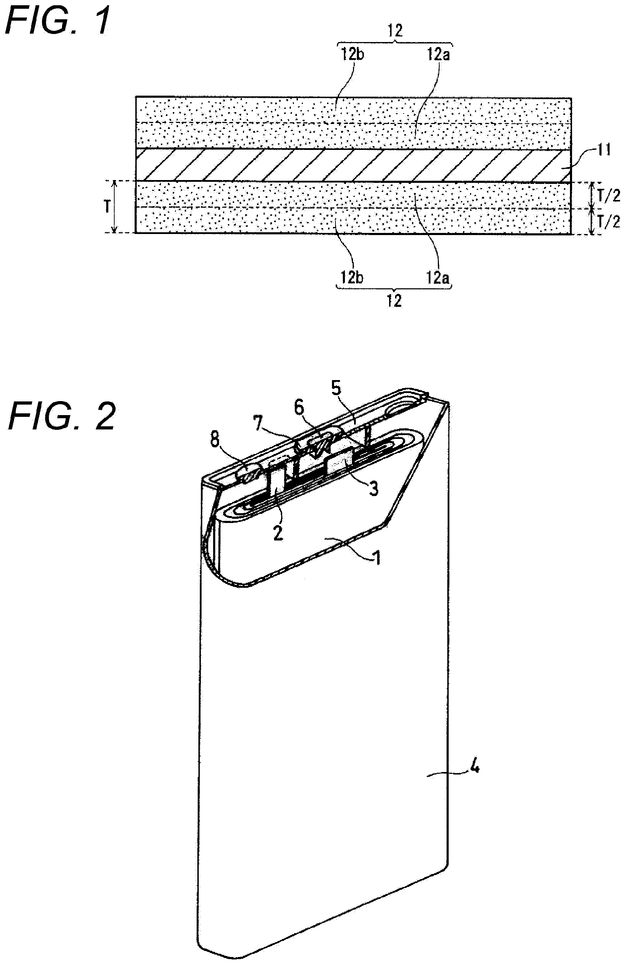

Here, FIG. 1 is a schematic cross-sectional view of a negative electrode for a non-aqueous electrolyte secondary battery according to one embodiment of the present disclosure.

The negative electrode has a sheet-like negative electrode current collector 11 and a negative electrode mixture layer 12 having a thickness T formed on both sides of the negative electrode current collector 11. The negative electrode mixture layer 12 contains a silicon material, a carbon material capable of absorbing and releasing lithium ions, and electrically conductive fibers. The negative electrode mixture layer 12 can be divided into two layers, a first region 12a and a second region 12b, having the same thickness, and the first region 12a is nearer to the negative electrode current collector than the second region 12b is. That is, the first region 12a and the second region 12b each have a thickness of T/2. The second region 12b is a half region of the negative electrode mixture layer 12 on the side opposite to the negative electrode current collector 11 (negative electrode surface side), and the first region 12a is a half region of the negative electrode mixture layer 12 on the negative electrode current collector 11 side. The silicon material is contained more in the second region 12b than in the first region 12a. The first region 12a may contain no silicon material. The conductive fibers are contained in the second region 12b. In FIG. 1, the negative electrode mixture layer 12 is formed on both sides of the negative electrode current collector 11, but the negative electrode mixture layer may be formed on one side of the negative electrode current collector.

### [Non-aqueous electrolyte secondary battery]

A non-aqueous electrolyte secondary battery according to an embodiment of the present disclosure includes a positive electrode, a negative electrode, and a non-aqueous electrolyte. In the negative electrode, the above-described negative electrode mixture layer is supported on a surface of a negative electrode current collector.

A detailed description will be given below of the non-aqueous electrolyte secondary battery according to an embodiment of the present disclosure.

### [Negative electrode]

The negative electrode includes a negative electrode current collector and a negative electrode mixture layer supported on a surface of the negative electrode current collector. The negative electrode mixture layer can be formed by, for example, applying a negative electrode slurry of a negative electrode mixture dispersed in a dispersion medium onto a surface of a negative electrode current collector, followed by drying. The applied film after drying may be rolled, if necessary. The negative electrode mixture layer may be formed on a surface of one side or both sides of the sheet-like negative electrode current collector. The negative electrode mixture includes a silicon material, a carbon material, and electrically conductive fibers. The negative electrode mixture may further contain a binder, a thickener, a conductive agent other than conductive fibers, and the like.

In view of achieving a higher capacity, the ratio of the carbon material to the total of the silicon material and the carbon material in the whole negative electrode mixture layer is preferably 98 mass% or less, more preferably 95 mass% or less. In view of achieving improved cycle characteristics, the ratio of the carbon material to the total of the silicon material and the carbon material in the whole negative electrode mixture layer is preferably 65 mass% or more, more preferably 80 mass% or more.

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; the above-described acrylic resin; vinyl resin, such as polyvinyl acetate; and a rubbery material, such as styrene-butadiene copolymer rubber (SBR). The binder may be used singly or in combination of two or more kinds.

Examples of the thickener include: carboxymethyl cellulose (CMC) and modified products thereof (including salts, such as Na salt); and cellulose derivatives (e.g., cellulose ethers), such as methyl cellulose. The thickener may be used singly or in combination of two or more kinds.

Examples of the conductive agent other than conductive fibers include: carbons, such as acetylene black; and metal powders, such as aluminum. The conductive agent may be used singly or in combination of two or more kinds.

The dispersion medium is not limited, and is exemplified by water, alcohols such as ethanol, ethers such as tetrahydrofuran, amides such as dimethylformamide, N-methyl-2-pyrrolidone (NMP), and a mixed solvent of these.

Examples of the negative electrode current collector include a non-porous electrically conductive substrate (e.g., metal foil) and a porous electrically conductive substrate (e.g., mesh, net, punched sheet). The negative electrode current collector may be made of, for example, stainless steel, nickel, a nickel alloy, copper, or a copper alloy. The thickness of the negative electrode current collector is not limited, but is preferably 1 to 50 µm, more preferably 5 to 20 µm.

### [Positive electrode]

The positive electrode includes, for example, a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, followed by drying. The dry applied film may be rolled, if necessary. The positive electrode mixture layer may be formed on a surface of one side or both sides of the positive electrode current collector. The positive electrode mixture includes, as an essential component, the positive electrode active material, and may include a binder, an electrically conductive agent, and other optional components. The dispersion medium of the positive electrode slurry may be NMP or the like.

The positive electrode active material may be, for example, a composite oxide containing lithium and a transition metal. Examples of the transition metal include Ni, Co, and Mn. Examples of the composite oxide containing lithium and a transition metal include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value "a" representing the molar ratio of lithium is a value immediately after the production of the active material, and increases and decreases during charge and discharge.

In particular, preferred is a lithium-nickel composite oxide represented by LiₐNi_{b}Me_{1-b}O₂, where Me is at least one selected from the group consisting of Mn, Co and Al, 0 < a ≤ 1.2, and 0.3 ≤ b ≤ 1. In view of achieving a higher capacity, b preferably satisfies 0.85 ≤ b ≤ 1. In view of the stability of the crystal structure, more preferred is LiₐNi_{b}Co_{c}Al_{d}O₂ containing Co and Al as elements represented by Me, where 0 < a ≤ 1.2, 0.85 ≤ b <1, 0 < c < 0.15, 0 < d ≤ 0.1, and b + c + d = 1.

Examples of the binder and the conductive agent are as those exemplified for the negative electrode. Additional examples of the conductive agent include graphite, such as natural graphite and artificial graphite.

The form and the thickness of the positive electrode current collector may be respectively selected from the forms and the range corresponding to those of the negative electrode current collector. The positive electrode current collector may be made of, for example, stainless steel, aluminum, an aluminum alloy, and titanium.

### [Non-aqueous electrolyte]

The non-aqueous electrolyte includes a non-aqueous solvent and a lithium salt dissolved in the non-aqueous solvent. The concentration of the lithium salt in the non-aqueous electrolyte is preferably, for example, 0.5 mol/L or more and 2 mol/L or less. By setting the lithium salt concentration in the above range, a non-aqueous electrolyte having excellent ion conductivity and appropriate viscosity can be obtained. However, the lithium salt concentration is not limited to the above.

As the non-aqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC) and ethylene carbonate (EC). A cyclic carbonic acid ester having an unsaturated bond, such as vinylene carbonate (VC), may be used. A cyclic carbonic acid ester having a fluorine atom, such as fluoroethylene carbonate (FEC), may be used. Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

As the lithium salt, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, imides, and like can be used. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). The lithium salt may be used singly or in combination of two or more kinds.

### [Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

The non-aqueous electrolyte secondary battery, for example, has a structure in which an electrode group formed by winding the positive electrode and the negative electrode with the separator interposed therebetween is housed in an outer case, together with the non-aqueous electrolyte. The wound-type electrode group may be replaced with a different form of electrode group, for example, a stacked-type electrode group formed by stacking the positive electrode and the negative electrode with the separator interposed therebetween. The non-aqueous electrolyte secondary battery may be in any form, such as cylindrical type, prismatic type, coin type, button type, or laminate type.

FIG. 1 is a schematic partially cut-away oblique view of a non-aqueous electrolyte secondary battery according to one embodiment of the present disclosure.

The battery includes a bottomed prismatic battery case 4, and an electrode group 1 and a non-aqueous electrolyte housed in the battery case 4. The non-aqueous electrolyte includes at least one additive selected from the group consisting of a sulfite compound and a sulfate compound. The electrode group 1 has a long negative electrode, a long positive electrode, and a separator interposed between the positive electrode and the negative electrode and preventing them from directly contacting with each other. The electrode group 1 is formed by winding the negative electrode, the positive electrode, and the separator around a flat plate-like winding core, and then removing the winding core.

To the negative electrode current collector of the negative electrode, a negative electrode lead 3 is attached at its one end, by means of welding or the like. The negative electrode lead 3 is electrically connected at its other end to a negative electrode terminal 6 disposed at a sealing plate 5. The negative electrode terminal 6 is electrically insulated from the sealing plate 5 by a resin gasket 7. To the positive electrode current collector of the positive electrode, a positive electrode lead 2 is attached at its one end, by means of welding or the like. The positive electrode lead 2 is connected at its other end to the back side of the sealing plate 5 via an insulating plate. That is, the positive electrode lead 2 is electrically connected to the battery case 4 serving as a positive electrode terminal. The insulating plate provides electrical insulation between the electrode group 1 and the sealing plate 5 and between the negative electrode lead 3 and the battery case 4. The periphery of the sealing plate 5 is engaged with the opening end of the battery case 4, and the engaging portion is laser-welded. In this way, the opening of battery case 4 is sealed with the sealing plate 5. Anon-aqueous electrolyte injection port provided in the sealing plate 5 is closed with a sealing stopper 8.

The present disclosure will be more specifically described below with reference to Examples and Comparative Examples. It is to be noted, however, that the present invention is not limited to the following Examples.

### <Example 1>

### [Preparation of first negative electrode slurry]

To 100 parts by mass of a first negative electrode active material, 1 part by mass of sodium carboxymethylcellulose (CMC-Na), 1 part by mass of styrene-butadiene rubber (SBR), and an appropriate amount of water were added and stirred, to prepare a first negative electrode slurry. The first negative electrode active material used here was graphite (average particle diameter (D50): 25 µm) only.

### [Preparation of second negative electrode slurry]

To 100 parts by mass of a second negative electrode active material, 0.56 parts by mass of carbon fibers, 1.0 part by mass of sodium polyacrylate, 1 part by mass of CMC-Na, 1 part by mass of SBR, and an appropriate amount of water were added and stirred, to prepare a second negative electrode slurry.

The second negative electrode active material used here was a mixture of a silicon material and graphite. In the second negative electrode active material, the mass ratio of the silicon material to the graphite was set to 12:88. The silicon material used here was SiOₓ particles (x = 1, average particle diameter (D50): 5 µm) coated with a conductive layer containing a conductive carbon. The amount of coating of the conductive layer was set to 5 parts by mass per 100 parts by mass of the total of the SiOₓ particles and the conductive layer. The graphite used here was the same as that used in the first negative electrode slurry. The carbon fibers used here were CNTs (average fiber diameter D: 9 nm, average fiber length L: 5 µm).

### [Production of negative electrode]

The first negative electrode slurry was applied onto both sides of a copper foil (thickness: 10 µm) serving as a negative electrode current collector, and the first applied films were dried. The second negative electrode slurry was further applied onto the first applied films formed on both sides of the copper foil, and the second applied films were dried. A stack of the first and second applied films after drying was rolled, so that a first negative electrode mixture layer (thickness: 100 µm, density 1.6 g/cm³) and a second negative electrode mixture layer (thickness: 100 µm, density 1.6 g/cm³) were formed in this order on each of both sides of the copper foil. In this way, a negative electrode a1 was obtained. The first negative electrode mixture layer and the second negative electrode mixture layer had the same thickness, and the first negative electrode mixture layer and the second negative electrode mixture layer were corresponding to the first region and the second region, respectively. The ratio: M1_{Si}/M2_{Si} of the mass M1_{Si} of the silicon material contained in the first region to the mass M2si of the silicon material contained in the second region was 0.

### [Production of positive electrode]

To 95 parts by mass of a lithium-containing composite oxide (LiNi_{0.8}Co_{0.18}Al_{0.02}O₂), 2.5 parts by mass of acetylene black (AB), 2.5 parts by mass of polyvinylidene fluoride, and an appropriate amount of N-methyl-2-pyrrolidone (NMP) were added and stirred, to prepare a positive electrode slurry.

The positive electrode slurry was applied onto both sides of an aluminum foil (thickness: 15 µm) by a doctor blade method, and the applied films were dried and rolled, to form a positive electrode mixture layer (density 3.6 g/cm³) on each side. In this way, a positive electrode was obtained.

### [Preparation of non-aqueous electrolyte]

To a mixed solvent of ethylene carbonate (EC) and dimethyl carbonate (DMC) (3:7 by volume), LiPF₆ was dissolved at a concentration of 1.0 mol/L, to obtain a non-aqueous electrolyte.

### [Fabrication of non-aqueous electrolyte secondary battery]

With a lead attached respectively to the negative electrode a1 and the positive electrode obtained above, the positive electrode and the negative electrode a1 were spirally wound with a separator interposed therebetween, to prepare an electrode group. With an electrically insulating plate respectively placed on the upper and lower surfaces of the electrode group, the electrode group was inserted into a bottomed cylindrical battery can. The positive electrode lead was welded to a sealing body, and the negative electrode lead was welded to the battery can. Next, the non-aqueous electrolyte was injected into the battery can, and a sealing body was placed at the opening end of the battery can with an insulating gasket interposed therebetween, and crimp-sealed. A cylindrical battery A1 was thus fabricated.

The battery A1 fabricated above was evaluated as follows.

### [Evaluation 1: Measurement of capacity retention ratio A in low-rate cycles]

In a 25 °C environment, constant-current charge was performed at a current of 0.3 C until the voltage reached 4.1 V, and then, constant-voltage charge was performed at a voltage of 4.1 V until the current reached 0.02 C. After a rest time of 10 minutes, constant-current discharge was performed at a current of 0.5 C until the voltage reached 2.85 V. With the above charge and discharge taken as one cycle, 90 cycles were performed in total, to determine a ratio of the discharge capacity at the 90th cycle to the discharge capacity at the first cycle, as a capacity retention ratio A.

### [Evaluation 2: Measurement of capacity retention ratio B in high-rate cycles]

In a 25 °C environment, constant-current charge was performed at a current of 0.7 C until the voltage reached 4.1 V, and then, constant-voltage charging was performed at a voltage of 4.1 V until the current reached 0.02 C. After a rest time of 10 minutes, constant-current discharge was performed at a current of 0.5 C until the voltage reached 2.85 V. With the above charge and discharge taken as one cycle, 90 cycles were performed in total, to determine a ratio of the discharge capacity at the 90th cycle to the discharge capacity at the first cycle, as a capacity retention ratio B.

Here, (1/X)C represents a current, and (1/X)C (A) = rated capacity (Ah) / X (h), where X is a length of time consumed for charging or discharging a quantity of electricity corresponding to the rated capacity. For example, 0.5C means that X = 2, and the current value is equal to the rated capacity (Ah) divided by 2 (h).

### <Comparative Example 1>

To 100 parts by mass of a negative electrode active material, 0.28 parts by mass of carbon fibers, 0.5 parts by mass of sodium polyacrylate, 1 part by mass of CMC-Na, 1 part by mass of SBR, and an appropriate amount of water were added and stirred, to prepare a negative electrode slurry. The negative electrode active material used here was a mixture of a silicon material and graphite. In the negative electrode active material, the mass ratio of the silicon material to the graphite was set to 6:94. The silicon material, graphite and carbon fibers used here were the same as those used in the negative electrode a1.

The negative electrode slurry was applied onto both sides of a copper foil (thickness: 10 µm) serving as a negative electrode current collector, and the applied films were dried and compressed to form a negative electrode mixture layer (thickness: 200 µm, density: 1.6 g/cm³) on each side. In this way, a negative electrode b 1 was obtained. The M1_{Si}/M2_{Si} was 1.

A battery B1 was fabricated and evaluated in the same manner as that of the battery A1 of Example 1, except that the negative electrode b1 was used instead of the negative electrode a1.

### <Comparative Example 2>

To 100 parts by mass of a first negative electrode active material, 0.5 part by mass of sodium polyacrylate, 1 part by mass of CMC-Na, 1 part by mass of SBR, and an appropriate amount of water were added and stirred, to prepare a first negative electrode slurry. The first negative electrode active material used here was a mixture of a silicon material and graphite (3:97 by mass).

To 100 parts by mass of a second negative electrode active material, 0.5 part by mass of sodium polyacrylate, 1 part by mass of CMC-Na, 1 part by mass of SBR, and an appropriate amount of water were added and stirred, to prepare a second negative electrode slurry. The second negative electrode active material used here was a mixture of a silicon material and graphite (9:91 by mass). The silicon material and graphite used here were the same as those used in the negative electrode a1.

The first negative electrode slurry was applied onto both sides of a copper foil (thickness: 10 µm) serving as a negative electrode current collector, and the first applied films were dried. The second negative electrode slurry was further applied onto the first applied films formed on both sides of the copper foil, and the second applied films were dried. A stack of the first and second applied films after drying was rolled, so that the first negative electrode mixture layer (thickness: 100 µm, density: 1.6 g/cm³) and the second negative electrode mixture layer (thickness: 100 µm, density: 1.6 g/cm³) were formed in this order on each of both sides of the copper foil. In this way, a negative electrode b2 was obtained.

A battery B2 of Comparative Example 2 was produced and evaluated in the same manner as that of the battery A1 of Example 1, except that the negative electrode b2 was used instead of the negative electrode a1.

### <Comparative Example 3>

In the first negative electrode active material, the mass ratio of the silicon material to the graphite was set to 9:91. In the second negative electrode active material, the mass ratio of the silicon material to the graphite was set to 3:97. Except for the above, a negative electrode b3 was obtained in the same manner as that of the negative electrode b2 of Comparative Example 2.

A battery B3 of Comparative Example 3 was produced and evaluated in the same manner as that of the battery A1 of Example 1, except that the negative electrode b3 was used instead of the negative electrode a1.

The evaluation results of the batteries A1 of Example 1 and the batteries B 1 to B3 of Comparative Examples 1 to 3 are shown in Table 1.

**[Table 1]**

| | Battery | Negative electrode | Mass ratio Graphite : SiOₓ : CNTs | | Evaluation | |
|---|---|---|---|---|---|---|
| | | | | | Low-rate cycles | High-rate cycles |
| | | | First negative electrode mixture layer (First region) | Second negative electrode mixture layer (Second region) | Capacity retention ratio A (%) | Capacity retention ratio B (%) |
| Ex. 1 | A1 | a2 | 100:0:0 | 88:12:0.56 | 93.4 | 89.0 |
| Com. Ex. 1 | B1 | b1 | 94:6:0.28 | 94:6:0.28 | 92.7 | 84.9 |
| Com. Ex. 2 | B2 | b2 | 97:3:0 | 91:9:0 | 89.3 | 84.4 |
| Com. Ex. 3 | B3 | b3 | 91:9:0 | 97:3:0 | 88.3 | 77.4 |

In the battery A1 of Example 1, the cycle characteristics were improved as compared to the batteries B1 to B3 of Comparative Examples 1 to 3, and especially, the high-rate cycle characteristics were significantly improved.

In the battery B1 of Comparative Example 1, in which the content of the silicon material in the first region was the same as that in the second region, the roughening of the negative electrode surface failed to proceed, and the cycle characteristics deteriorated.

In the battery B2 of Comparative Example 2, in which the silicon material was contained more in the second region than in the first region, the roughening of the negative electrode surface proceeded, but due to the absence of CNTs in the second region, the conductive paths for the isolated silicon material were not secured, and the cycle characteristics deteriorated.

In the battery B3 of Comparative Example 3, the graphite was contained much in the second region, and the silicon material was contained much in the first region, which respectively resulted in a reduced permeability of the non-aqueous electrolyte into the negative electrode mixture layer, and in a failure of the progress of roughening of the negative electrode surface. Therefore, in the battery B3, the cycle characteristics deteriorated.

### [Industrial Applicability]

The non-aqueous electrolyte secondary battery according to the present disclosure can be suitably used for, for example, applications for which excellent cycle characteristics are required.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing stopper
- 11: negative electrode current collector
- 12: negative electrode mixture layer
- 12a: first region
- 12b: second region

## Claims

1. A negative electrode for a non-aqueous electrolyte secondary battery, comprising:
a negative electrode current collector; and a negative electrode mixture layer supported on the negative electrode current collector, wherein
the negative electrode mixture layer includes a silicon material, a carbon material capable of electrochemically absorbing and releasing lithium ions, and electrically conductive fibers,
the silicon material has a lithium-ion conductive phase, and silicon particles dispersed in the lithium-ion conductive phase,
when the negative electrode mixture layer is divided into two layers, a first region and a second region, having the same thickness, the first region is nearer to the negative electrode current collector than the second region is,
the silicon material is contained more in the second region than in the first region, and
the electrically conductive fibers are contained in the second region.

2. The negative electrode for a non-aqueous electrolyte secondary battery according to claim 1, wherein
the lithium-ion conductive phase includes at least one selected from the group consisting of a SiO₂ phase, a silicate phase, and a carbon phase, and
the silicate phase contains at least one selected from the group consisting of an alkali metal and a Group 2 element.

3. The negative electrode for a non-aqueous electrolyte secondary battery according to claim 1 or 2, wherein a content of the silicon material in the second region is 1 mass% or more and 30 mass% or less.

4. The negative electrode for a non-aqueous electrolyte secondary battery according to any one of claims 1 to 3, wherein the electrically conductive fibers include carbon fibers.

5. The negative electrode for a non-aqueous electrolyte secondary battery according to any one of claims 1 to 4, wherein an average fiber diameter D of the electrically conductive fibers is 1 nm or more and 15 nm or less.

6. The negative electrode for a non-aqueous electrolyte secondary battery according to any one of claims 1 to 5, wherein a content of the electrically conductive fibers in the second region is 0.001 mass% or more and 1 mass% or less.

7. The negative electrode for a non-aqueous electrolyte secondary battery according to any one of claims 1 to 6, wherein the carbon material includes graphite.

8. The negative electrode for a non-aqueous electrolyte secondary battery according to claim 7, wherein a BET specific surface area of the graphite is 3.0 m²/g or more and 4.5 m²/g or less.

9. The negative electrode for a non-aqueous electrolyte secondary battery according to claim 7 or 8, wherein a particle internal porosity of the graphite is 10 % or more.

10. The negative electrode for a non-aqueous electrolyte secondary battery according to any one of claims 1 to 9, wherein a content of the carbon material in the first region is 85 mass% or more and 99 mass% or less.

11. The negative electrode for a non-aqueous electrolyte secondary battery according to any one of claims 1 to 10, wherein the second region includes an acrylic resin in an amount of 1 mass% or less.

12. A non-aqueous electrolyte secondary battery, comprising:
a positive electrode; a negative electrode; and a non-aqueous electrolyte, wherein
the negative electrode is the negative electrode of any one of claims 1 to 11.
